# EUROPEAN PATENT APPLICATION

(11) **EP 1 852 645 A1**
(43) Date of publication of application: **07.11.2007**
(21) Application number: 07251851.7
(22) Date of filing: 02.05.2007
(51) Int. Cl.: F16M 11/04, F16M 11/18, F16M 11/12

(54) **Display rotation and extension apparatus and control method thereof**

(30) Priority: 02.05.2006 KR 20060039451
(71) Applicant: Samsung Electro-Mechanics Co., Ltd, Suwon Gyunggi-do 443-743 (KR)
(72) Inventor: Park, Kyoung-Shin 208-604, Woncheon Jug. Apt. 2danji, Suwon-si, Gyeonggi-do (KR); Kim, Jae-Kyung, Ansan-si, Gyeonggi-do (KR); Lee, Chil-Sung 103-809 Samsung APT, Suwon-si Gyeonggi-do 441-758 (KR); Choi, Dong-Won 103-904, Woncheon Jug. Apt. 1-danji, Suwon-si Gyeonggi-do 443-755 (KR)
(74) Representative: Mounteney, Simon James

(57) **Abstract**

A display rotation and extension apparatus and a control method thereof are disclosed. A display rotation apparatus that includes a support body (4), a universal joint (2) which is coupled to the support body, a movable body (1) which is coupled to the universal joint, a driving part (3) which is coupled to the support body and the movable body and which rotates the movable body about the universal joint, and a rotation sensing part (24) which is attached to the driving part and which senses the degree of rotation of the movable body, allows the display to be rotated automatically and manually in every direction, and allows auto-centering for the display by remote controlling.

## Description

### BACKGROUND

### 1. Technical Field

The present invention relates to a display rotation and extension apparatus and a control method thereof.

### 2. Description of the Related Art

Flat panel displays, such as TV's or monitors employing LCD's, PDP's, LED's, etc., provide the benefit of allowing efficient use of spaces, and are fast replacing Braun tube TV's and monitors. The increase in demand for such flat panel displays is expected to continue into the future. In particular, flat panel LCD or PDP TV's, often referred to as "wall-mount TV's," are fixedly attached to wall surfaces for use. When viewing a wall-mount TV thus fixed, the largest viewing angle is achieved directly in front of the TV.

However, when the TV is fixed to a wall surface, the position that allows the largest viewing angle of the TV screen is also fixed, and as a viewer changes position, adequate viewing may not be obtained. It is difficult to modify the TV's position with the conventional wall-mount TV, because there is little or no distance between the TV and the wall, and even if the TV is spaced from the wall surface by means of additional members, it is not possible to rotate the TV to a desired orientation. Also, attempting to resolve such problems using an apparatus to maintain a certain distance may result in another problem of degrading the elegant appearance and the efficiency in utilizing an indoor space, which are important benefits of wall-mount TV's.

### SUMMARY

An aspect of the invention is to provide a display rotation and extension apparatus which protrudes from a fixed body such as a wall, and which allows automatic and manual rotation in every direction. Also, an aspect of the invention is to provide an apparatus and method for auto-centering a display with a remote control.

One aspect of the invention provides a display rotation apparatus that includes a support body, a universal joint which is coupled to the support body, a movable body which is coupled to the universal joint, a driving part which is coupled to the support body and the movable body and which rotates the movable body about the universal joint, and a rotation sensing part which is attached to the driving part and which senses the degree of rotation of the movable body.

The driving part may include a tension member coupled to two points on the movable body opposite to each other about the universal joint, a roller member which guides the path of the tension member, and a motor part which is positioned on the path of the tension member and which applies a tensile force on the tension part to rotate the movable body about the universal joint, while the rotation sensing part may be coupled to the motor part and may sense the degree of rotation of the movable body.

The motor part may include a motor, and a rotation part coupled to a driving axis of the motor, while the rotation sensing part may include a magnetized body coupled to the rotation part, a detection element which is positioned opposite the magnetized body and which senses changes in polarity of the magnetized body, and a control part which senses the amount of rotation of the rotation part based on signals inputted from the detection element.

Meanwhile, the rotation part may include a slip pulley, and the tension member may be coupled to the slip pulley. The slip pulley refers to a pulley where slipping occurs when a certain degree of external force is applied. This is so that when the tension member is moved manually, the rotor of the motor coupled to the slip pulley does not undergo forced rotation. Also, a tension adjusting apparatus may further be coupled onto the path of the tension member, to maintain constant tension on the tension member.

In addition, an elastic body may further be included that has one end coupled to the movable body, where the elastic body may apply an elastic force on the movable body to counter the gravitational moment of the display.

Another aspect of the invention provides a display extension apparatus that includes a fixed body; a link part which has one end coupled to the fixed body; a driving part which is coupled to a joint of the link part and which includes a motor part and a rotation part that is coupled to the driving axis of the motor part to rotate; a rotation sensing part which includes a magnetized body coupled to the rotation part, a detection element which is positioned opposite the magnetized body and which senses changes in polarity of the magnetized body, and a control part which senses the amount of rotation of the rotation part based on signals inputted from the detection element; and a supporting body coupled to the other end of the link part. The supporting body is spaced from the fixed body according to the driving of the link part.

Meanwhile, the link part may include a first hinge member coupled to the fixed body, a second hinge member coupled to the supporting body, a first link member having one end rotatably coupled to the first hinge member, and a second link member having one end rotatably coupled to the second hinge member. The link part may be interposed between the fixed body and the support body to space the supporting body from the fixed body. Thus, numerous variations may be implemented.

Yet another aspect of the invention provides a method of controlling the position of a display, for a display apparatus comprising a rotation part configured to allow coupling of the display thereto, a fixed part configured to rotatably support the rotation part, a detection element coupled to one of the fixed part and the rotation part, and a magnetized body coupled to the other of the fixed part and the rotation part. The method includes measuring by means of the detection element a change in polarity of the magnetized body occurring in correspondence with an alteration in the relative position between the fixed part and the rotation part, and storing as a base value; rotating the rotation part for a predetermined length of time, and accumulating in a comparative value the measurement values of changes in polarity of the magnetized body measured by means of the detection element; and further performing the rotating and accumulating, if the difference between the comparative value and the base value exceeds a predetermined tolerance value, and stopping the rotation part, if the difference between the comparative value and the base value is less than or equal to the tolerance value.

The method may further include initializing the comparative value, before the rotating and accumulating. This is to set a new comparative value.

Additional aspects and advantages of the present invention will be set forth in part in the description which follows, and in part will be obvious from the description, or may be learned by practice of the invention.

### BRIEF DESCRIPTION OF THE DRAWINGS

Fig. 1 is a side elevational view of a display rotation apparatus according to a first disclosed embodiment of the invention.
Fig. 2a is a cross sectional view of a motor part according to a second disclosed embodiment of the invention.
Fig. 2b is a perspective view of the motor part according to the second disclosed embodiment of the invention.
Fig. 3a is a distribution graph of polarity according to rotation angle according to the second disclosed embodiment of the invention.
Fig. 3b shows the relative positions of the magnetized body and detection according to the second disclosed embodiment of the invention.
Fig. 4 is a plan view of a display extension apparatus according to a third disclosed embodiment of the invention.
Fig. 5 is a front elevational view and magnified view of a rotation apparatus for a standing-type display according to a fourth disclosed embodiment of the invention.
Fig. 6a is a flowchart of a method of controlling the position of a display according to a fifth disclosed embodiment of the invention.
Fig. 6b is a diagram of a display position control system according to the fifth disclosed embodiment of the invention.
Fig. 6c is a side elevational view of a display rotation and extension apparatus according to the fifth disclosed embodiment of the invention.
Fig. 6d is a plan view of a display rotation and extension apparatus according to the fifth disclosed embodiment of the invention.

### DETAILED DESCRIPTION

Embodiments of the display rotation and extension apparatus and control method thereof according to certain aspects of the invention will be described below in more detail with reference to the accompanying drawings. In the description with reference to the accompanying drawings, those components are rendered the same reference number that are the same or are in correspondence regardless of the figure number, and redundant explanations are omitted. Also, the basic principles will first be described before discussing the preferred embodiments of the invention.

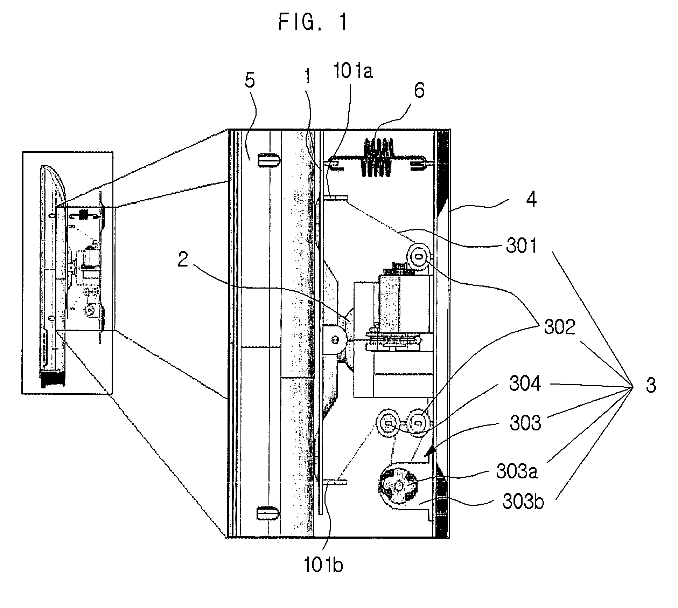

Fig. 1 is a side elevational view of a display rotation apparatus according to a first disclosed embodiment of the invention. In Fig. 1 are illustrated a movable body 1, connecting members 101a, 101b, a universal joint 2, a driving part 3, a tension member 301, roller members 302, a motor part 303, a pulley 303a, a motor 303b, a tension adjusting apparatus 304, a support body 4, a display 5, and an elastic body 6.

The movable body 1 is the part to which the display 5 is coupled, and may be formed as a single body with the display 5. The movable body 1 may be coupled to the support body 4 by way of the universal joint 2. The connecting members 101 a, 101b may be formed on the movable body 1, with the tension member 301 coupled to the connecting members 101a, 101b. The connecting members 101 a, 101b may be formed symmetrically about the universal joint 2, so that the movable body 1 and the display 5 attached to it can smoothly move up and down. Likewise, a pair of connecting members (not shown) may additionally be formed on the movable body 1 symmetrically about the universal joint 2, for rotating the movable body 1 left and right.

The elastic body 6 may be coupled between the movable body 1 and the support body 4 to counter the gravitational moment of the display 5. As the weight of a flat panel TV amounts to several tens of kilograms, in many cases the display in this embodiment will have a considerable mass. Thus, if the elastic body 6 is not coupled between the movable body 1 and support body 4 as in Fig. 1, the display 5 droops downward about the universal joint 2, and the moment thus created subjects the tension member 301 to high tension. If the motor were to be operated in this situation, the motor would be overloaded due to the tension on the tension member 301. As shown in Fig. 1, a coil spring may be used for the elastic body 6, but any of various other springs may also be used that provide an equivalent function. The elastic body 6 may be joined to any part of the support 4 or the movable body 1, as long as it prevents the drooping of the display 5 due to the moment.

The driving part 3 may be composed of the tension member 301, roller members 302, motor part 303, motor 303b, rotation part 303a, and tension adjusting apparatus 304. The tension member 301 may be a wire, belt, or chain, etc. In this embodiment, a wire is used. As shown in the figure, the tension member 301 may be coupled with the connecting parts 101 a, 101b. The tension member 301 may be coupled with the roller members 302 for guiding the path and with the first motor part 303 for supplying power to the tension member 301. While two roller members 302 are used in the embodiment of Fig. 1, the number of roller members 302 may vary according to the situation.

The motor part 303 may include the rotation part 303a and motor 303b, and in this embodiment, the rotation part 303a is composed as a slip pulley, to which the tension member 303 is coupled. In Fig. 1, since the tension member 301 is a wire, a corresponding slip pulley 303a is joined. However, in the case where the tension member 301 is a chain, a corresponding sprocket may be used. Meanwhile, although the motor part 303 may be coupled to the support body 4 as shown in Fig. 1, the motor part 303 may just as well be coupled to the movable body 1.

The slip pulley 303a described in this embodiment refers to a pulley that has an adjusted frictional force, so that no slipping occurs when the motor 303b is rotating, but slipping does occur when the tension member 301 is forcibly moved by an external force while the motor 303b is not operated. A detailed description of the operation principle of the slip pulley 303a is as follows.

The slip pulley 303a may transfer the driving power of the motor 303b to the tension member 301 such that finally the display 5 is rotated up and down or left and right. Therefore, the frictional force between the slip pulley 303a and the tension member 301 should be great enough to move the display 5. That is, slipping should not occur between the slip pulley 303a and the tension member 301 when the motor 303b rotates. However, when the tension member 301 is forcibly moved by an external force and not by the operation of the motor 303b, slipping may occur, so that the motor 303b is not subject to forced rotating. That is, the frictional force between the tension member 301 and the slip pulley 303a should be smaller than the cogging torque of the motor 303b.

The tension adjusting apparatus 304 may be positioned on the path of the tension member 301 and may be coupled with the tension member 301. The tension adjusting apparatus 304 may also be a kind of pulley. However, it is made to vary in position, in order that the tension may be adjusted. As the form and configuration of this tension adjusting apparatus 304 is obvious to the person skilled in the art, detailed description on this matter will not be provided. While the coupling position of the tension adjusting apparatus 304 in the embodiment of Fig. 1 is the support 4, it may just as well be coupled to the movable body 1.

Meanwhile, a rotation sensing part may be coupled to the motor part 303. The rotation sensing part may be composed of a magnetized body, a detection element coupled to the motor 303b opposite the magnetized body for sensing changes in the polarity and magnetic force of the magnetized body, and a control part for sensing the amount of rotation of the rotation part 303a based on signals inputted from the detection element.

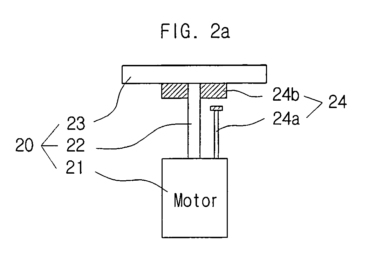

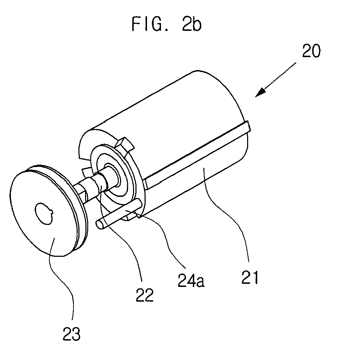

Fig. 2a is a cross sectional view of the motor part according to a second disclosed embodiment of the invention, and Fig. 2b is a perspective view of the motor part according to the second disclosed embodiment of the invention. In Figs. 2a and 2b are illustrated a motor part 20, motor 21, driving axis 22, rotation part 23, detection element 24a, magnetized body 24b, and rotation sensing part 24. As illustrated in the figure, the magnetized body 24b, made of N- and S-poles, may be attached to the rotation part 23, and the detection element 24a may be attached to the motor 21, opposite to the magnetized body 24b.

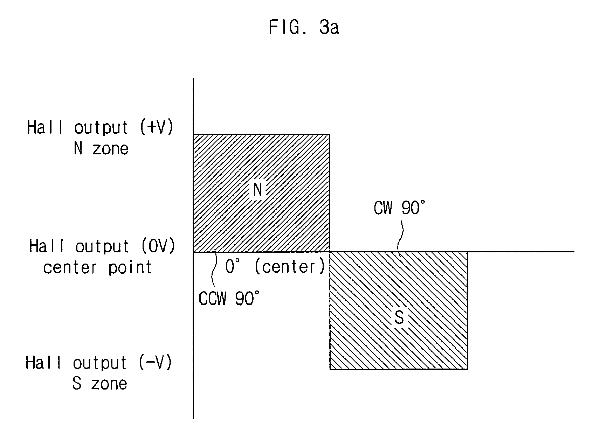

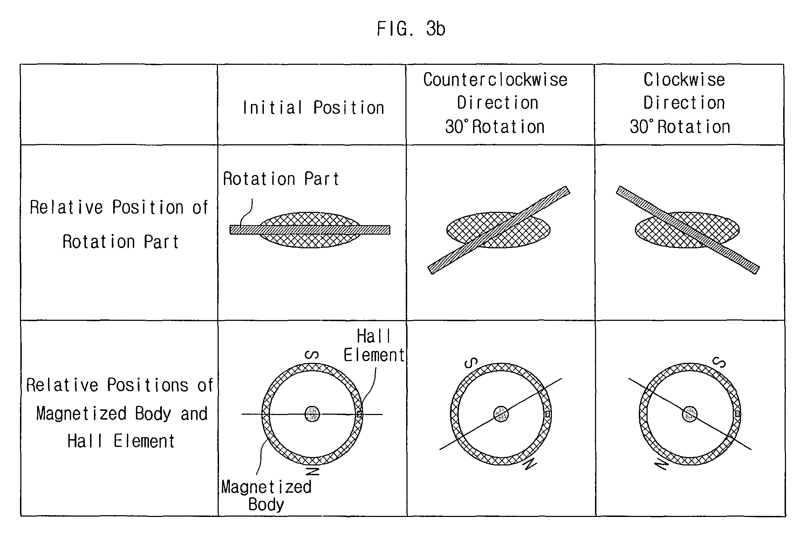

The detection element 24a may be a sensor that senses the amount of polarity. The detection element 24a may sense the polarity of the magnetized body 24b, which changes as the rotation part 23 rotates, and transfer it to the control part (not shown). For example, in the case where the rotation part 23 is attached with the N- and S-poles divided into 180 degree zones, the rotating of the rotation part 23 every 180 degrees causes the polarity to change from the N-pole to the S-pole or from the S-pole to the N-pole, as illustrated in Fig. 3a. Also, even in the same zone of an N-pole, the magnetic force may be measured differently according to the rotation angle. Based on this, the detection element 24a may sense the degree of rotation of the rotation part 23 and transfer it to the control part (not shown). Fig. 3b is a chart illustrating the position of the rotation part and the relative position of the detection element, when the rotation part rotates by a certain angle clockwise and counterclockwise with respect to a center position. As illustrated in the chart, the detection element is positioned at different zones of polarity according to the rotated position of the rotation part, and the polarity and magnetic force are varied accordingly.

The control part may serve to analyze the information inputted from the detection element 24a and drive the motor 21. This control part may be connected such that the detection element 24a and motor 21 can exchange signals, and it is not important where the control part is coupled. Meanwhile, the control part may further include an apparatus for receiving signals inputted from a remote control. The control part may analyze and remember the amount of rotation, how much the rotation part 23 has rotated from the initial position, based on the signals inputted from the detection element 24a. Afterwards, when the display is to be returned to its original position, the motor 21 may be rotated in reverse, based on the amount of rotation already inputted. This control method will be described in more detail later.

Meanwhile, as the detection element 24a and the magnetized body 24b may be attached to the rotation part 23 and motor 21 such that they are opposite to each other, the detection element 24a does not necessarily have to be attached to the motor 21. Moreover, while in this embodiment the rotation sensing part 24 is installed on the motor 21 and rotation part 23, it may just as well be attached to any portion of the driving part 3 of Fig. 1, if it can sense the rotation of the display.

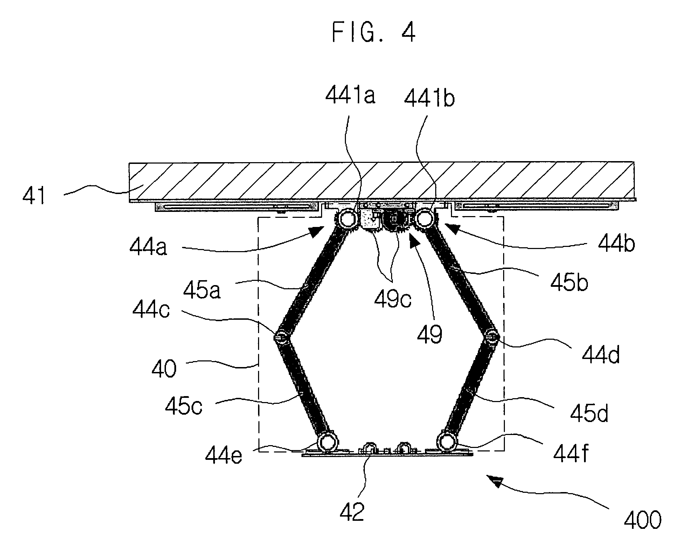

Fig. 4 is a plan view of a display extension apparatus according to a third disclosed embodiment of the invention. In Fig. 4 are illustrated a link part 40, a fixed body 41, a support body 42, a first hinge member 44a, a second hinge member 44b, a third hinge member 44c, a fourth hinge member 44d, a fifth hinge member 44e, a sixth hinge member 44f, a first link member 45a, a second link member 45b, a third link member 45c, a fourth link member 45d, a motor part 49, idle gears 49c, and a display extension apparatus 400 are illustrated.

This embodiment illustrates a display extension apparatus 400 with two pairs of link members. The first link member 45a and the second link member 45b may each have one end coupled to the first hinge member 44a and the second hinge member 44b, respectively. Thus, they may rotate about a central axis by a certain angle. Also, the other end of each of the first link member 45a and second link member 45b and one end of each of the third link member 45c and fourth link member 45d, as well as the other end of each of the third link member 45c and fourth link member 45d and the support body 42, may respectively be coupled by way of the third to sixth hinge members 44c-44f.

While the motor part 49 may be coupled to the first to sixth hinge members 44a-44f to move the link members, an even number of idle gears 49c may be coupled between the first gear 441a and the second gear 441b formed respectively on the first hinge member 44a and second hinge member 44b, and the motor part 49 may be coupled with one of the first gear 441a, second gear 441b, and idle gears 49c, to supply driving power. The even number of idle gears 49c make the first gear 441a and second gear 441b rotate in opposite directions, so that the link members may operate smoothly, and so that the first and second link members 45a, 45b are driven by the same amount of force without a high load concentrated on any one link member.

While in this embodiment, the first gear 441 a and second gear 441b are coupled with the first hinge member 44a and second hinge member 44b with the idle gears 49c and the motor part 49 coupled in-between, the idle gears 49c and the motor part 49 may just as well be coupled between the fifth hinge member 44e and the sixth hinge member 44f in a similar fashion. Moreover, the first gear 441a and second gear 441b may be directly coupled together without idle gears 49c.

A rotation sensing part 24 such as that illustrated in Figs. 2a and 2b may be attached to the motor part 49 of the display extension apparatus 400 as well, to sense the degree of rotation of the link members.

Meanwhile, when this embodiment is practiced with the universal joint 2, the display 5 coupled to the universal joint 2, and the driving part 3 for automatically rotating the display 5, shown in Fig. 1, coupled to the support body 42 of the display extension apparatus 400, the display 5 can be spaced from the support body and contracted, and can also be rotated with respect to the support body 42, so that the display 5 may be viewed from a variety of angles.

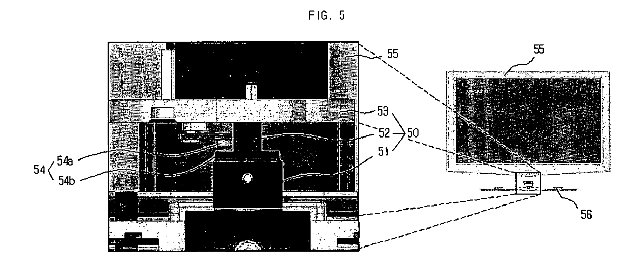

Fig. 5 is a front elevational view and partially magnified view of a rotation apparatus for a standing-type display according to a fourth disclosed embodiment of the invention. In Fig. 5 are illustrated a motor part 50, motor 51, driving axis 52, rotation part 53, detection element 54a, magnetized body 54b, rotation sensing part 54, support body 56, and display 55.

The standing-type display rotation apparatus may be composed of the support body 56 and the motor part 50. Many variations are possible for the support body 56 as long as it is able to support the display 55 in a stable manner. The motor part 50 may be coupled to the portion where the display 55 and the support body 56 are connected. The motor 51 of the motor part 50 may be secured to the support body 56, and the rotation part 53 of the motor part 50 connected to the driving axis 52 of the motor part 50 may be coupled to the display 55. When the driving axis 52 is coupled directly to the display 55 without using a particular member, the rotation part 53 can be considered to include the display 55.

The detection element 54a of this embodiment may be coupled to the rotation part 53, and the magnetized body 54b may be coupled to the motor 51. The operation principle of the rotation sensing part 54, including the detection element 54a, rotation part 53, and control part, is the same as that for the second disclosed embodiment, and thus detailed descriptions will not be provided on this matter.

A detailed description will now be given on how the rotation sensing part 24 of the embodiments in Figs. 1 and 4 may effectively control the display rotation apparatus and extension apparatus.

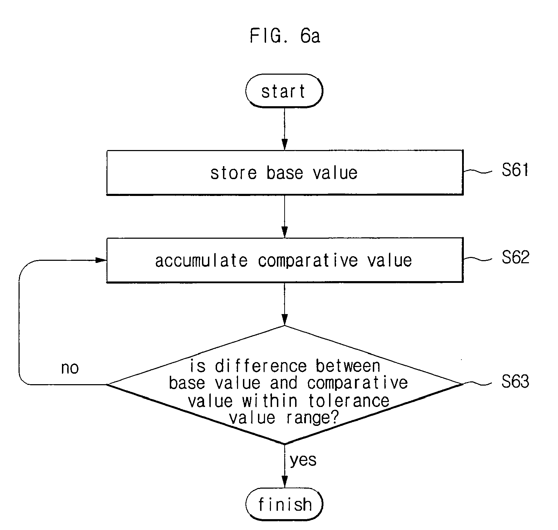

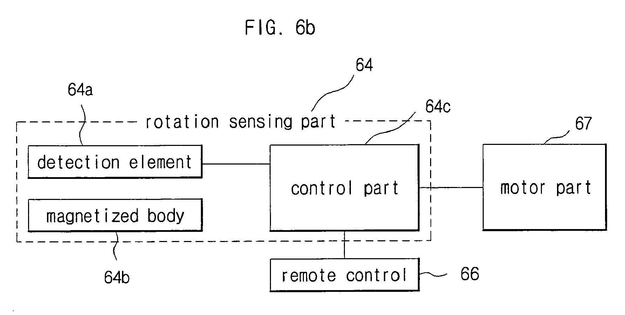

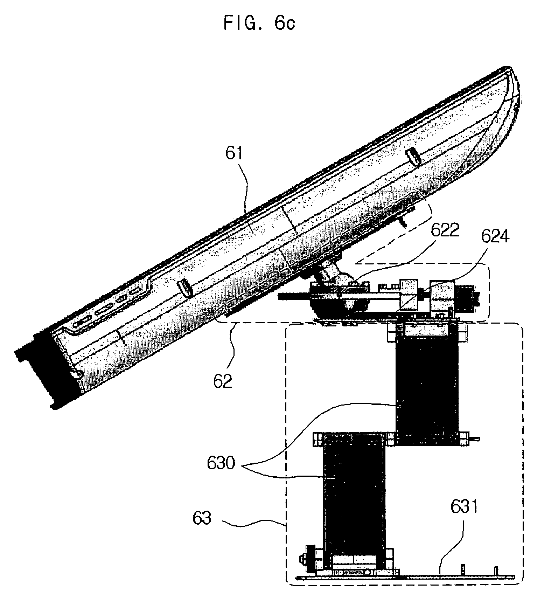

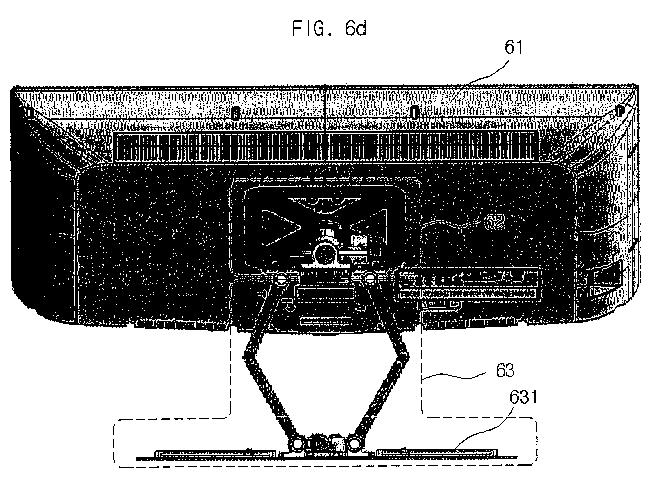

Fig. 6a is a flowchart of a method of controlling the position of a display according to a fifth disclosed embodiment of the invention, Fig. 6b is a diagram of a display position control system according to the fifth disclosed embodiment of the invention, Fig. 6c is a side elevational view of a display rotation and extension apparatus according to the fifth disclosed embodiment of the invention, and Fig. 6d is a plan view of a display rotation and extension apparatus according to the fifth disclosed embodiment of the invention. In Figs. 6b, 6c, and 6d are illustrated a display 61, display rotation apparatus 62, display extension apparatus 63, rotation sensing part 64, detection element 64a, magnetized body 64b, control part 64c, remote control 66, and motor part 67.

As illustrated in Figs. 6c and 6d, the form of the display rotation and extension apparatus may have the link part 40 of the display extension apparatus illustrated in Fig. 4 coupled to the support body 4 of the display rotation apparatus illustrated in Fig. 1.

Meanwhile, the display rotation and extension apparatus of this embodiment may be divided into a fixed part and a rotation part. However, the fixed part and rotation part are merely relative concepts. That is, when the display rotation apparatus 62 rotates, the support body 624 becomes the fixed part, and all of the parts rotating about the support body 624 including the universal joint 622 become the rotation part. On the other hand, from the perspective of the display extension apparatus 63, the fixed part refers to the fixed body 631, and the rotation part refers to the link part 630 moving with respect to the fixed body.

The rotation sensing part 64 of this embodiment may be coupled with the rotation part and the fixed part, and specifically, may be attached to the motor part 67 that makes the rotation part rotate about the fixed part. Figs. 2a and 2b are exemplary figures illustrating the rotation sensing part 24 coupled to the motor part 20. The rotation sensing part 64 senses how much the rotation part has rotated about the fixed part, after which the control part 64c controls the display 61 to rotate to the initial position. A description will now be given on a method of controlling the position of the display by means of such rotation sensing part 64.

Operation S61 of Fig. 6a is that of measuring, by means of the detection element 64a, changes in polarity of the magnetized body 64b that occur in correspondence with alterations in the relative positions of the fixed part and the rotation part, and storing as a base value. A viewer may rotate and extend the display extension apparatus 63 and display rotation apparatus 62 from afar by means of an apparatus such as a remote control 66. Here, the detection element 64a of the rotation sensing part 64 may sense the position changed from the initial position and convert it to a signal to transfer to the control part 64c. The control part 64c stores the relative difference between the initial position and the changed position as a base value.

Operation S62 of Fig. 6a is that of rotating the rotation part for a predetermined length of time, and accumulating the measurement values of changes in polarity of the magnetized body 64b, measured by means of the detection element 64a, in a comparative value. In order to rotate the display 61 to the initial position, the motor of the motor part 67 may be driven based on the base value of operation S61. The control part 64c may control the motor by means of external input signals or an internal built-in program to rotate the display 61 to the initial position. Here, the detection element 64a may measure polarity changes of the magnetized body 64b according to the driving of the motor and input them to the control part 64c, where the control part 64c may accumulate the measured values thus inputted in the comparative value. Here, the term "accumulating" refers to adding the new measured values to the previous comparative value for use as a new comparative value, and is not limited to addition (+) in the mathematical sense but includes various mathematical procedures to process the measured values into a collected value.

Operation S63 of Fig. 6a is that of further performing operation S62, if the difference between the comparative value and the base value exceeds a predetermined tolerance value, and stopping the rotation part, if the difference between the comparative value and the base value is less than or equal to the tolerance value. Operation S63 is to repeat the process of decreasing the difference between the measured values and the base value until it is within a certain tolerance range. This operation is repeated until the difference between the comparative value and the base value falls within the tolerance value, at which the driving of the motor is stopped. Obtaining the "difference," when comparing the difference between the comparative value and the base value with the tolerance value, is not necessarily limited to subtraction (-) in the mathematical sense, but includes various mathematical procedures to yield a value in correspondence with the difference between two values (the comparative value and the base value).

An operation of initializing the comparative value may be added before operation S62. This is so that the value from a newly started measurement is not added to the previous comparative value. That is, after an action of rotating the rotation part to the initial position is complete, the comparative value is initialized, and the next measurement value is added to the comparative value to be set as the new comparative value.

According to certain embodiments of the invention as set forth above, the display rotation apparatus not only allows automatically rotating a display in every direction, but also prevents damage on the motor even when rotated manually. Also, the display can be automatically extended and contracted using the display extension apparatus. Furthermore, when the display is not used, it can be automatically centered, to prevent accidents involving collisions with the wall surface.

While the above description has pointed out novel features of the invention as applied to various embodiments, the skilled person will understand that various omissions, substitutions, and changes in the form and details of the device or process illustrated may be made without departing from the scope of the invention. Therefore, the scope of the invention is defined by the appended claims rather than by the foregoing description. All variations coming within the meaning and range of equivalency of the claims are embraced within their scope.

## Claims

1. A display rotation apparatus comprising:
a support body;
a universal joint coupled to the support body;
a movable body coupled to the universal joint;
a driving part coupled to the support body and the movable body and configured to rotate the movable body about the universal joint; and
a rotation sensing part attached to the driving part and configured to sense the degree of rotation of the movable body.

2. A display rotation apparatus according to claim 1, wherein the driving part comprises:
a tension member coupled to two points on the movable body opposite to each other about the universal joint;
a roller member configured to guide the path of the tension member; and
a motor part positioned on the path of the tension member and configured to apply a tensile force on the tension part to rotate the movable body about the universal joint, and
the rotation sensing part is coupled to the motor part and configured to sense the degree of rotation of the movable body.

3. A display rotation apparatus according to claim 2, wherein a tension adjusting apparatus is further coupled onto the path of the tension member.

4. A display rotation apparatus according to claim 2 or 3, further comprising an elastic body having one end coupled to the movable body, the elastic body configured to apply an elastic force countering the gravitational moment of the display on the movable body.

5. A display rotation apparatus according to any one of claims 2 to 4, wherein the motor part comprises a motor, and a rotation part coupled to a driving axis of the motor, and
the rotation sensing part comprises a magnetized body coupled to the rotation part, a detection element positioned opposite the magnetized body and configured to sense changes in polarity of the magnetized body, and a control part configured to sense the amount of rotation of the rotation part based on signals inputted from the detection element.

6. A display rotation apparatus according to claim 5, wherein the rotation part comprises a slip pulley, and the tension member is coupled to the slip pulley.

7. A display rotation apparatus according to claim 5 or 6, wherein a tension adjusting apparatus is further coupled onto the path of the tension member.

8. A display rotation apparatus according to any one of claims 5 to 7, further comprising an elastic body having one end coupled to the movable body, the elastic body configured to apply an elastic force countering the gravitational moment of the display on the movable body.

9. A display extension apparatus comprising:
a fixed body;
a link part having one end coupled to the fixed body;
a driving part coupled to a joint of the link part and comprising a motor part and a rotation part, the rotation part coupled to a driving axis of the motor part and configured to rotate;
a rotation sensing part comprising a magnetized body coupled to the rotation part, a detection element positioned opposite the magnetized body and configured to sense changes in polarity of the magnetized body, and a control part configured to sense the amount of rotation of the rotation part based on signals inputted from the detection element; and
a supporting body coupled to the other end of the link part,
wherein the supporting body is spaced from the fixed body according to the driving of the link part.

10. A display extension apparatus according to claim 9, wherein the link part comprises:
a first hinge member coupled to the fixed body;
a second hinge member coupled to the supporting body;
a first link member having one end rotatably coupled to the first hinge member; and
a second link member having one end rotatably coupled to the second hinge member.

11. A method of controlling the position of a display, for a display apparatus comprising a rotation part configured to allow coupling of the display thereto, a fixed part configured to rotatably support the rotation part, a detection element coupled to one of the fixed part and the rotation part, and a magnetized body coupled to the other of the fixed part and the rotation part, the method comprising:
measuring by means of the detection element a change in polarity of the magnetized body occurring in correspondence with an alteration in the relative positions of the fixed part and the rotation part, and storing as a base value;
rotating the rotation part for a predetermined length of time, and accumulating in a comparative value the measurement values of changes in polarity of the magnetized body measured by means of the detection element; and
further performing the rotating and accumulating, if the difference between the comparative value and the base value exceeds a predetermined tolerance value, and stopping the rotation part, if the difference between the comparative value and the base value is less than or equal to the tolerance value.

12. A method according to claim 11, further comprising initializing the comparative value, before the rotating and accumulating.
